# EUROPEAN PATENT APPLICATION

(11) **EP 1 445 687 A2**
(43) Date of publication of application: **11.08.2004**
(21) Application number: 04000252.9
(22) Date of filing: 08.01.2004
(51) Int. Cl.: G06F 3/023

(54) **Reconfigurable control switch system on a steering wheel**

(30) Priority: 15.01.2003 US 342508
(71) Applicant: DaimlerChrysler Corporation, Auburn Hills, Michigan 48326-2757 (US)
(72) Inventor: Alkarawi, Atheel, S., West Bloomfield, MI 48323 (US); Jaworski, David, J., Bloomfield, MI 48302-2739 (US); Liu, Sam, K., West Bloomfield, MI 48322 (US)
(74) Representative: Wehnert, Werner, Dipl.-Ing.

(57) **Abstract**

A reconfigurable steering wheel control switch system for a motor vehicle comprises a first module, a second module, a plurality of switches mounted on a steering wheel, and a multiplexer. The multiplexer is in communication with the first module, with the second module, and with the plurality of switches. The multiplexer communicates with the first module and with the second module to determine which one of these modules is currently active. When the first module is active, the multiplexer assigns a first configuration of functions to the plurality of switches. These functions are used to control the first module from the steering wheel. When the second module is active, the multiplexer assigns a second configuration of functions to the plurality of switches. These functions are used to control the second module from the steering wheel.

## Description

### FIELD OF THE INVENTION

The present invention relates to control switch systems and more particularly to a reconfigurable steering wheel control switch system for a motor vehicle.

### BACKGROUND OF THE INVENTION

Typical motor vehicles have a number of accessories or modules installed within the instrument panel of the vehicle. These modules typically include radio systems, tape players, and CD players. Recent advances in electronics have led to an increasing number of new vehicle modules within the instrument panel in addition to the more conventional modules. For example, these new modules can include hands-free phone systems, multimedia and telematic systems, and navigation systems. In order to operate these new vehicle modules effectively, a greater number of control switches are required. Typically, these control switches are located on the instrument panel or on the steering wheel of the motor vehicle. These steering wheel control switches are placed to allow easy fingertip control by the operator of the motor vehicle in order to minimize driver distraction.

Conventional steering wheel control switches have a specific function assigned to the switch itself. Therefore, only those vehicle modules that can use the specific assigned function can be operated by the steering wheel controls. Complex vehicle modules that require different functions in order to be effectively operated require additional control switches separate from other module control switches. This can lead to an increased complexity of the control switch system which in turn can lead to increased driver distraction and increased assembly costs.

### SUMMARY OF THE INVENTION

A reconfigurable steering wheel control switch system for a motor vehicle is provided. The control switch system has a first module, a second module, a plurality of switches mounted on a steering wheel, and a multiplexer. The multiplexer is in communication with the first module, with the second module, and with the plurality of switches. The multiplexer communicates with the first module and with the second module to determine which one of these modules is currently active.

When the first module is active, the multiplexer assigns a first configuration of functions to the plurality of switches. These functions are used to control the first module from the steering wheel. When the second module is active, the multiplexer assigns a second configuration of functions to the plurality of switches. These functions are used to control the second module from the steering wheel.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a schematic view of a control system in a motor vehicle according to the principles of the present invention;

Figure 2 is an illustration of steering wheel control switches according to the principles of the present invention;

Figure 3 is a table of steering wheel control switch functions mapped to different modules according to the principles of the present invention;

Figure 4A is a graph of voltage versus time illustrating control switches A, C, D, and F activation according to the principles of the present invention; and

Figure 4B is a graph of voltage versus time illustrating control switches B and E activation according to the principles of the present invention.

### DETAILED DESCRIPTION OF THE PREFERRED EMBODIMENTS

The following description of the preferred embodiments is merely exemplary in nature and is in no way intended to limit the invention, its application, or uses.

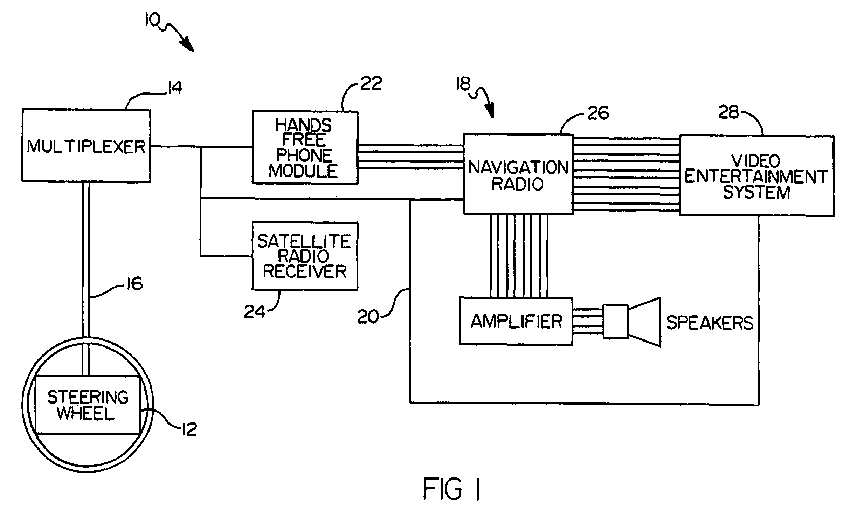

Referring now to Figure 1, there is shown a schematic view of a control system 10 in a motor vehicle having a steering wheel control switch system 12 in communication with a multiplexer 14 through bus 16. Other methods of communication between the control switch system 12 and the multiplexer 14, for example wireless radio frequency communication, may also be used. The multiplexer 14 in turn communicates two-way with a plurality of vehicle modules 18 through a CAN-B Bus Link Network 20. Other methods of communication, for example a fiber optic network, may also be used so long as the method of communication provides for two-way communication between the multiplexer 14 and the plurality of vehicle modules 18. The plurality of vehicle modules 18, for example, includes a hands-free phone system 22, a satellite radio 24, a navigation radio (or navigation system) 26, and a video entertainment system 28. Other vehicle modules that can be connected to the multiplexer include an AM/FM radio, a cassette tape player, or a CH/CD-C player.

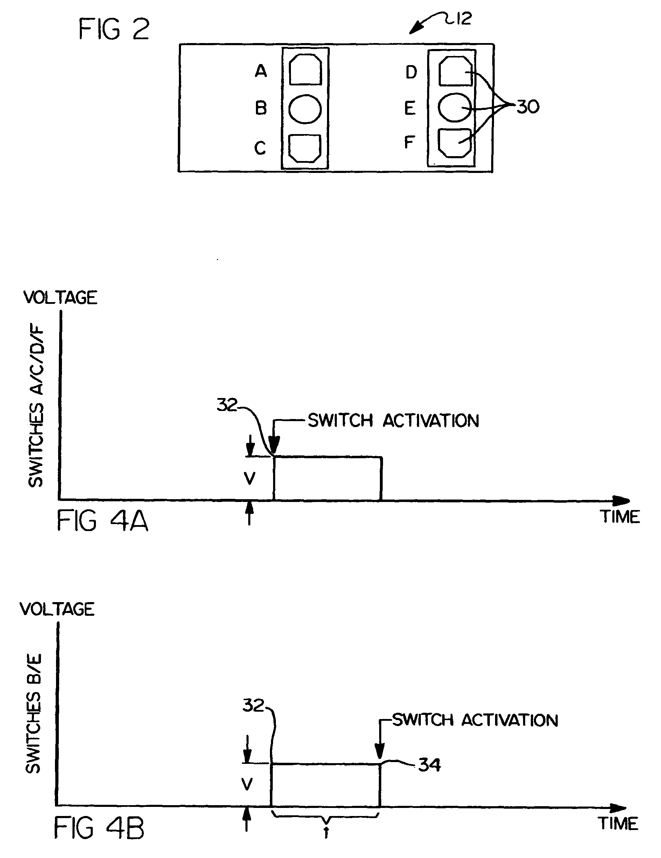

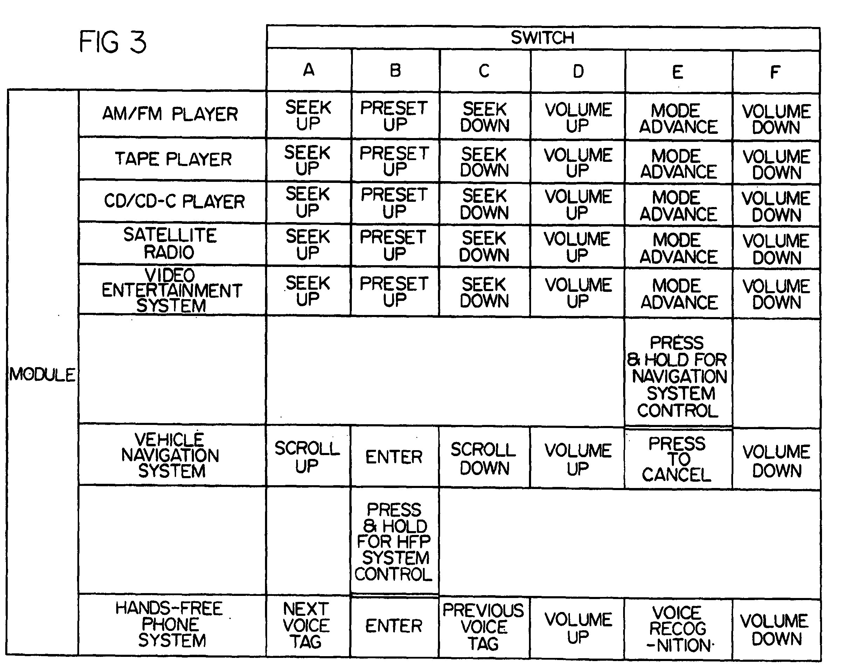

Referring now to Figure 2, the steering wheel control switch system 12 includes a plurality of control switches 30. In the particular example provided, six control switches have been illustrated, labeled A, B, C, D, E, and F, arranged in two columns. However, those skilled in the art will appreciate that any number of switches may be used and the switches may be arranged in any number of ways.

Each of the switches A, B, C, D, E, and F has a unique voltage associated with its activation. When one of switches A, B, C, D , E, and F is depressed, the voltage travels through the bus 16 to the multiplexer 14. The multiplexer 14 measures the voltage to determine which one of the switches A, B, C, D, E, and F was activated. The multiplexer 14 then assigns a function to the activated switch using a software interpreter, according to the table shown in Figure 3. Which function is assigned depends on which one of the switches A, B, C, D , E, and F was activated and which one of the plurality of vehicle modules 18 is currently active. Once a function has been assigned, the multiplexer 14 then sends the function through the Bus Link Network 20 to the active vehicle module 18. The active vehicle module 18 communicates that it is active to the multiplexer 14 through the Bus Link Network 20. Switching between active vehicle modules 18 is accomplished through the steering wheel control switch system 12.

Since each function for the switches A, B, C, D, E, and F is assigned in the multiplexer 14, the switches A, B, C, D, E, and F may each have different functions depending on which vehicle module 18 is active. For example, switch B can be assigned a preset up function when the video entertainment system 28 is active, and can then be assigned a totally different function, for example an enter function, when the hands-free phone system 22 is active. Figure 3 shows the recommended assignment of functions to the switches A, B, C, D, E, and F according to which one of the vehicle modules 18 is active. However, those skilled in the art will appreciate that various other functions may be assigned in any number of configurations to the switches A, B, C, D , E, and F.

Referring now to Figures 4A and 4B, when one of switches A, B, C, D, E, and F are depressed, the switches A, B, C, D, E, and F send a specific voltage "v" to the multiplexer 14. Switches A, C, D, and F are activated as soon as the multiplexer 14 receives the voltage "v", indicated at point 32. However, switches B and E are not activated at point 32, but instead when the voltage sent to the multiplexer 14 ends, indicated at point 34. The time "t" that elapses from voltage start, point 32, to voltage end, point 34, determines what function is assigned to switches B and E. The time "t" is compared to a predetermined time value, for example two seconds. However, any amount of time may be used. If the time "t" is less than the predetermined time value of two seconds, a function is assigned to the activated switch. If the time "t" is greater than or equal to the predetermined time value of two seconds, then a different function is assigned to the activated switch. For example, referring again to Figure 3, if the navigation system 26 is active and switch B is activated, holding switch B for greater than two seconds will activate the hands-free phone system 22, while holding switch B for less than two seconds will send the enter function to the navigation system 26.

The description of the invention is merely exemplary in nature and, thus, variations that do not depart from the gist of the invention are intended to be within the scope of the invention. Such variations are not to be regarded as a departure from the spirit and scope of the invention.

## Claims

1. A reconfigurable control switch system for a motor vehicle comprising:
a first module;
a second module;
a plurality of switches;
a multiplexer communicating with said first module and with said second module to determine which one of said first and second modules is currently active;
said multiplexer communicating with said plurality of switches and assigning a first configuration of functions to said plurality of switches for controlling said first module when said first module is active and assigning a second configuration of functions to said plurality of switches for controlling said second module when said second module is active.

2. The reconfigurable control switch system of claim 1, wherein one of said first and said second modules includes an AM/FM radio.

3. The reconfigurable control switch system of claim 1, wherein one of said first and said second modules includes a tape player.

4. The reconfigurable control switch system of claim 1, wherein one of said first and said second modules includes a CD/CD-C player.

5. The reconfigurable control switch system of claim 1, wherein one of said first and said second modules includes a satellite radio.

6. The reconfigurable control switch system of claim 1, wherein one of said first and said second modules includes a video entertainment system.

7. The reconfigurable control switch system of claim 1, wherein one of said first and said second modules includes a navigation system.

8. The reconfigurable control switch system of claim 1, wherein one of said first and said second modules includes and a hands-free phone.

9. The reconfigurable control switch system of claim 1, wherein said multiplexer communicates with said first module and said second module through a CAN-B Bus Link Network.

10. The reconfigurable control switch system of claim 1, wherein activating one of said plurality of switches sends a voltage to said multiplexer over the period of time that said switch is held activated.

11. The reconfigurable control switch system of claim 10, wherein said multiplexer sends an assigned function to whichever of said first and second modules is active when said multiplexer first receives said voltage.

12. The reconfigurable control switch system of claim 10, wherein said multiplexer sends an assigned function to whichever of said first and second modules is active when the period of time said switch is held active is less than a predetermined value and sends a different assigned function when the period of time said switch is held active is greater than or equal to said predetermined value.

13. The reconfigurable control switch system of claim 1, wherein said plurality of switches are mounted on a steering wheel.

14. A reconfigurable steering wheel control switch system for a motor vehicle comprising:
a steering wheel having a plurality of switches;
a video entertainment system;
a vehicle navigation system;
a hands-free phone system;
a multiplexer in communication with said video entertainment system, with said vehicle navigation system, and with said hands-free phone system to determine which is currently active; and
said multiplexer communicating with said plurality of switches and assigning a configuration of functions to said plurality of switches for each one of said video entertainment system, said vehicle navigation system, and said hands-free phone system.

15. The reconfigurable steering wheel control switch system for a motor vehicle of claim 14, wherein one of said plurality of switches is assigned a mode advance function, said mode advance function switching which one of said video entertainment system, said vehicle navigation system, and said hands-free phone system is active.

16. The reconfigurable steering wheel control switch system for a motor vehicle of claim 14, wherein pressing and holding one of said plurality of switches for a period of time activates one of said vehicle navigation system and said hands-free phone system.

17. The reconfigurable steering wheel control switch system for a motor vehicle of claim 14, wherein when said video entertainment system is active, said multiplexer assigns said plurality of switches a seek up function, a preset up function, a seek down function, a volume up function, and a volume down function.

18. The reconfigurable steering wheel control switch system for a motor vehicle of claim 14, wherein when said vehicle navigation system is active, said multiplexer assigns said plurality of switches a scroll up function, an enter function, a scroll down function, a volume up function, a cancel function, and a volume down function.

19. The reconfigurable steering wheel control switch system for a motor vehicle of claim 14, wherein when said hands-free phone system is active, said multiplexer assigns said plurality of switches a next voice tag function, an enter function, a previous voice tag function, a volume up function, a voice recognition function, and a volume down function.
